# EUROPÄISCHE PATENTANMELDUNG

(11) **EP 0 713 898 A1**
(43) Veröffentlichungstag der Anmeldung: **29.05.1996**
(21) Anmeldenummer: 95118126.2
(22) Anmeldetag: 17.11.1995
(51) Int. Cl.: C08K 5/00, C08L 77/00

(54) **Stabilisiertes Polyamid und Verfahren zu seiner Herstellung**

(30) Priorität: 22.11.1994 DE 4441429
(71) Anmelder: A. SCHULMAN GMBH, D-50170 Kerpen (DE)
(72) Erfinder: Christ, Hubert, Dr., D-52399 Merzenich (DE)
(74) Vertreter: Godemeyer, Thomas, Dr.

(57) **Zusammenfassung**

Gegenstand der Erfindung ist ein stabilisiertes Polyamid enthaltend, bezogen auf die Polyamidmasse,
0,01 bis 3 Gew% einer Verbindung der Formel I: 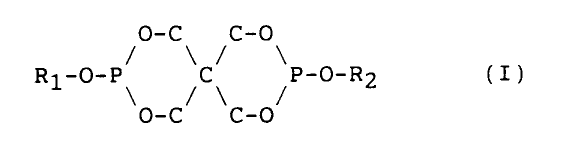
und/oder der Formel II 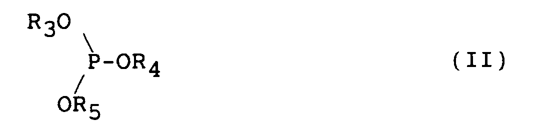
worin R₁ bis R₅ gleich oder verschieden sein können und Wasserstoff, Alkyl, Cycloalkyl, Aralkyl, Phenyl, substituiertes Phenyl, Hydroxyphenyl, substituiertes Hydroxyphenyl oder -(OC)-CₙH₂ₙ₊₁, wobei n = 1 bis 20 ist, bedeuten
und 0,01 bis 1 Gew% Terephthalsäuredialdehyd und/oder seiner Acetale von C₁- bis C₄-Alkoholen.

Ein weiterer Gegenstand der Erfindung ist ein Verfahren zur Herstellung der Polyamide und ein Verfahren zur Erhöhung der Viskosität von Polyamiden.

## Beschreibung

Gegenstand der Erfindung sind Polyamide, ein Verfahren zu ihrer Herstellung sowie ein Verfahren zur Erhöhung der Viskosität von Polyamiden.

Es ist bekannt, daß Polyamide durch Hitze- und Druckeinwirkung bei der Verarbeitung und durch Licht sowie Lagerung einer Veränderung ihrer chemischen Zusammensetzung ausgesetzt sind, die zu einer Schwächung der mechanischen, physikalischen und optischen Eigenschaften der Polyamide führt. Es sind daher zahlreiche Zusatzstoffe entwickelt worden, die den Polyamiden zugegeben werden, um diesen Effekt zu unterdrücken oder zu vermeiden.

Die Eigenschaften von Polyamiden sind insbesondere ihre hohe Steifigkeit und Schlagzähigkeit bzw. Kerbschlagzähigkeit sowie sehr gute Wärmeformbeständigkeit. Deshalb finden Polyamide in zunehmendem Maße Anwendung im Kraftfahrzeug-, Geräte-, Apparate- oder Maschinenbau. Gerade in diesen Einsatzgebieten ist die thermische Beanspruchung dieser Werkstoffe sehr hoch.

Aus der FR 1,558,350 ist für die Stabilisierung von Polyamid-66-Filamenten der Einsatz von Natriumhypophosphiten und organischen Ammoniumhypophosphiten in Kombination mit phenolischen Antioxidanzien bekannt. Nachteil dieser Kombination ist, daß diese Phosphite durch Konditionierung der Polyamide ausgewaschen werden und somit die Langzeitstabilisierung vermindert wird.

Aus der DE-C 18 17 212 ist ein Stabilisationssystem bekannt, das die Alterung von Polyamid-6 durch Hinzugabe von Dialkyl-p-hydroxyphenylalkancarbonsäureamide vorschlägt. Zur Stabilisierung von Polyamid-6-Granulat wird insbesondere Hexamethylendiamin-bis-[3-(3',5'-di-tertiär-butyl-4'-hydroxyphe nyl)-propionyl]-amid und 1,1- bis -(3'-tertiär-butyl-4-hydroxy-6'-methylphenyl)-butan eingesetzt. Diese Substanzen sind unter der Bezeichnung Irganox® 1010 und Santo White Powder® im Handel erhältlich.

Aus dem Stand der Technik sind weiterhin Stabilisationsmittel bekannt, die eine Pentaerythriteinheit besitzen. Diese werden beispielsweise gemäß der EP-B 0 159 294 hergestellt durch Umesterung von Pentaerythrit mit Triphenylphosphit und nachträglicher Umesterung mit Dialkylphenolen zu entsprechenden Di-(dialkylphenol)-pentaerythrit-diphosphiten. Diese Substanzen wurden beispielsweise gemäß der EP-A 0 430 650 in Polyamiden als UV-lichstabilisierende Systeme verwendet, die im wesentlichen aus drei Komponenten bestanden, nämlich phenolischen Antioxidantien, einer Phosphitverbindung und aminhaltigen Lichstabilisierungsmitteln.

Aus der US 5,114,996 ist es weiterhin bekannt, derartige Diphosphitverbindungen als Stabilisierungsstoffe bei thermoplastischen, talkgefüllten Polyestern zu verwenden.

Das technische Problem der Erfindung war es, ein System zu entwickeln, das eine bessere Stabilisierung von Polyamiden, insbesondere ihrer mechanischen Eigenschaften, ermöglicht.

Dieses technische Problem wird dadurch gelöst, daß das stabilisierte Polyamid bezogen auf die Polyamidmasse,
0,01 bis 3 Gew% einer Verbindung der Formel I: 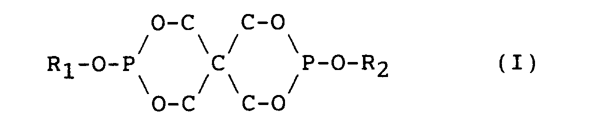
und/oder der Formel II 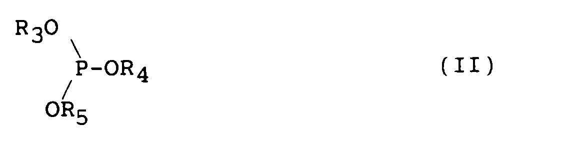
worin R₁ bis R₅ gleich oder verschieden sein können und Wasserstoff, Alkyl, Cycloalkyl, Aralkyl, Phenyl, substituiertes Phenyl, Hydroxyphenyl, substituiertes Hydroxyphenyl oder -(OC)-CₙH₂ₙ₊₁, wobei n = 1 bis 20 ist, bedeuten
und 0,01 bis 1 Gew% Terephthalsäuredialdehyd und/oder seiner Acetale von C₁- bis C₄-Alkoholen enthält.

Bei der Untersuchung neuer Stabilisatorsysteme für Polyamide wurde nämlich überraschenderweise gefunden, daß bei Zugabe von Terephthalsäuredialdehyd zu einem Polyamid, das die Verbindungen der Formel I oder II enthält, eine überraschende Erhöhung der Viskosität dieser Polyamide eintritt. Diese stabilisierende Wirkung ist darauf zurückzuführen, daß die Oxidationsempfindlichkeit und die Thermostabilität der Polyamide verbessert wird. Diese stabilisierende Wirkung ist bei Polyamiden aller Arten festzustellen, auch bei solchen, die mit Füllstoffen wie Glasfaser oder Mineralien modifiziert sind oder auch schlagzähmodifiziert sind.

Polyamide im Sinne der Erfindung können hergestellt werden durch Polymerisation von Diaminen und Dicarbonsäuren und/oder Aminocarbonsäuren oder deren korrespondierenden Lactamen wie aus dem Stand der Technik bekannt ist. Die bevorzugten Polyamide besitzen Polyamideinheiten der folgenden strukturellen Formel -NH-(CH₂)ₖ-CO worin k in bevorzugter Weise 6, 9, 10, 11 oder 12 ist. Das Polyamid besitzt bevorzugt Einheiten, die zu 100 % aus der oben angegebenen Formel bestehen. Es kann jedoch auch Einheiten enthalten, von anderen Nicht-Polyamiden, wie beispielsweise Olefinpolymeren. In diesen Fällen wird das Copolyamid ungefähr 75 % der oben angegebenen Polyamideinheiten in der polymeren Kette enthalten. Besonders bevorzugt für die Erfindung sind die Polyamide Polyamid-6 (Polycaprolactam), Polyamid-6,6 (Polyhexamethylenadipinamid), Nylon-69 (Polyhexamethylenazelainsäureamid), Polyamid-610 (Polyhexamethylensebacinamid), Polyamid-612 (Polyhexamethylendodekanamid), Polyamid-11 (Polyundekanamid) und Polyamid-12 (Polydodekanamid).

In einer bevorzugten Ausführungsform wird dem Stabilisatorsystem aus der Verbindung der Formel I und/oder der Formel II ein weiterer Zusatzstoff der Formel III 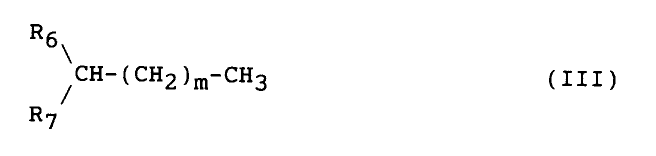
hinzugefügt, worin m = 0 bis 10 ist und R₆ und R₇ dieselbe Bedeutung haben wie R₁ bis R₅. Besonders bevorzugt ist eine Substanz der Formel III, worin m = 2 und R₆ und R₇ gleich 3,5-Di-tertiär-butyl-4-hydroxyphenyl oder 3-Tertiär-butyl-4-hydroxy-6-methylphenyl ist. Die erste Substanz ist unter der Handelsbezeichnung Lovinox® 44B25 im Handel erhältlich. Die Verbindung der Formel III wird in bevorzugter Weise in Mengen von 0,1 bis 0,05 Gew% bezogen auf die Gesamtmasse zugegeben.

Das Polyamid kann weiterhin Verstärkungsmaterialien wie Glasfasern oder auch Kohlenstoffasern, synthetische Polymerfasern, Aluminiumfasern, Titanfasern, Stahlfasern, Wolframfasern und keramische Fasern enthalten. Diese sind gewöhnlicherweise in einer Konzentration von 20 bis 40 Gew% in dem Polyamid enthalten.

Weiterhin kann das Polyamid Füllstoffe enthalten. Hierzu gehören Füllstoffe wie Calciumsilikat, Siliciumdioxid, Tone, Talk, Glimmer, Polytetrafluorethylen, Graphit, Aluminiumoxid, Natriumaluminiumcarbonat, Bariumferrit oder Pigmente. Das Stabilisatorsystem gemäß der Verbindung der Formel I ist in bevorzugter Weise eine Verbindung, in der R₁ und R₂ 2,4-Di-tertiär-butylphenyl oder -(CO)-C₁₇H₃₅ sind.

Diese Verbindungen, nämlich bis-[2,4-Di-tertiär-butylphenyl]-spiropentaerythritoldiphosphit und Distearylpentaerythritoldiphosphit sind unter den Handelbezeichnungen Weston® 626 oder Ultranox® 626 beziehungsweise Weston® 619 oder Ultranox® 619 im Handel erhältlich.

Das Stabilisatorsystem gemäß der Formel II ist in bevorzugter Weise eine Verbindung, in der R₃, R₄ und R₅ jeweils 2,6-Di-tertiär-butylphenyl oder 2,4,6-Tri-tertiär-butylphenyl ist. Die Verbindung Tris-[2,4-Di-tertiär-butylphenyl]-phosphit ist unter der Bezeichnung Irgafos® 168 im Handel erhältlich.

Die Polyamide gemäß der Erfindung werden durch Mischen der einzelnen Komponenten, Schmelzen und anschließendem Granulieren in einem Extruder bei üblichen Temperaturen hergestellt.

Die Verwendung von Phosphiten und Diphosphiten war bisher für Polyamide nur für die UV-Stabilisierung bekannt. Lediglich bei Polyestern war es bekannt, daß durch die Zugabe dieser Phosphitverbindungen der Formeln I und II auch eine Viskositätsverbesserung erreicht werden kann.

Zwar war aus dem Stand der Technik, der von der Anmelderin eingereichten DE-C 42 24 668 bereits die Verwendung von Terephthalsäuredialdehyd als Stabilisierungsmittel zur Erhöhung der Molmassen von Polyamiden bekannt, jedoch war nicht zu erwarten, daß bei der Kombination mit dem Stabilisatorsystem gemäß der Erfindung eine signifikant größere Viskositätssteigerung erreicht werden würde.

Ein weiterer Gegenstand der Erfindung ist daher ein Verfahren zur Erhöhung der Viskosität von Polyamiden durch Hinzugabe von 0,01 bis 3 Gew% der Verbindung der Formel I und 0,01 bis 1 Gew% der Terephthalsäuredialdehyd und/oder seiner Acetale von C₁- bis C₄-Alkohol. Zusätzlich kann in bevorzugter Weise eine Verbindung der Formel III hinzugefügt werden.

Die folgenden Beispiele sollen die Erfindung näher erläutern und insbesondere den synergistischen Effekt zwischen Terephtalsäuredialdehyd und den Verbindungen der Formeln I und II darstellen.

### Beispiele

### Beispiele 1 bis 3 und Vergleichsbeispiele V1 bis V4

In einem ZSK 30/Werner und Pfleiderer werden bei 200 U/min. 20 kg/Std. Durchsatz an Polyamid-6 bzw. Polyamid-66 mit Glasfaser und Stabilisator in der Schmelze gemischt, stranggranuliert und Prüfkörper spritzgegossen. Die relative Viskosität für Polyamid-6 wurde ermittelt bei 25 °C in 98 %iger H₂SO₄ zu 500 mg pro 100 ml Lösung. In den Beispielen mit Polyamid-66 wurde die relative Viskosität, gemessen bei 23 °C in 500 mg/100 ml 96 %iger H₂SO₄. Die Ergebnisse zeigt die Tabelle 1.

Dabei sind mit V die Vergleichsbeispiele gekennzeichnet, die entweder eine Verbindung der Formel I oder II oder Terephthalsäuredialdehyd enthalten und mit den Ziffern ohne Buchstaben sind die Beispiele zur vorliegenden Anmeldung gekennzeichnet.

Die aus der DE-C 42 24 668 bekannten relativen Viskositäten sind für PA6 ohne Zusatz von TDA 1,79 mit einem Zusatz von 0,1 Gew% TDA 1,87. Bei PA66 ohne Zusatz von TDA 1,78, mit einem Zusatz von 0,1 Gew% TDA 1,83.

Aus der Tabelle 1 ist zu entnehmen, daß bei Zugabe der erfindungsgemäßen Kombination aus Verbindungen der Formel I oder II und TDA eine signifikante Erhöhung der Viskositätszahl zu beobachten ist, die im Falle des PA6 von 161,0 bzw. 163,8 auf 172,7 und im Falle des Polyamids-66 von 170,8 bzw. 163,7 auf 179,7 ansteigt.

**Tabelle 1**

| Beispiel | PA / GF | TDA | Weston 626® | Lowinox 44B25® | Wachs | Viskositätszahl | 0 _{rel.} |
|---|---|---|---|---|---|---|---|
| 1 | PA 66 / 35GF | 0,1 | 0,25 | -- | 0,6 | 179,7 | 1,90 |
| V1 | PA 66 / 35GF | -- | 0,25 | -- | 0,6 | 170,8 | 1,85 |
| V2 | PA 66 / 35GF | 0,1 | -- | -- | 0,6 | 163,7 | 1,82 |
| | | | | | | | |
| 2 | PA 6 / 35 GF | 0,1 | 0,2 | 0,2 | 0,6 | 167,5 | 1,84 |
| 3 | PA 6 / 35 GF | 0,1 | 0,25 | -- | 0,6 | 172,7 | 1,86 |
| V3 | PA 6 / 35 GF | 0,1 | -- | -- | 0,6 | 163,8 | 1,82 |
| V4 | PA 6 / 35 GF | -- | 0,2 | 0,2 | 0,5 | 161,0 | 1,80 |
| PA / GF glasfaserverstärktes PA. Die Ziffer gibt den Gehalt an Glasfaser in Gew-% an. TDA Terephthalsäuredialdehyd Weston 626 ® Bis [2,4-di-tert.-butylphenyl]-spiropentaerythritol Lowinox 44B25 ® 1,1-bis(3',5'-di-tert.-butyl-4'-hydroxyphenyl)-butan Alle Angaben in Gew-% V = Vergleichsbeispiel | | | | | | | |

## Patentansprüche

1. Stabilisiertes Polyamid enthaltend, bezogen auf die Polyamidmasse,
0,01 bis 3 Gew% einer Verbindung der Formel I: 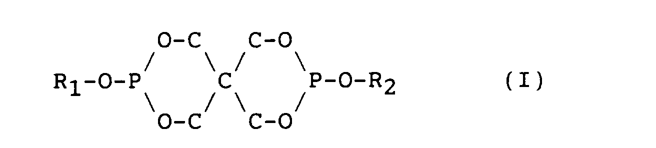 und/oder der Formel II 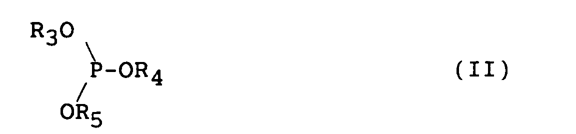 worin R₁ bis R₅ gleich oder verschieden sein können und Wasserstoff, Alkyl, Cycloalkyl, Aralkyl, Phenyl, substituiertes Phenyl, Hydroxyphenyl, substituiertes Hydroxyphenyl oder -(OC)-CₙH₂ₙ₊₁, wobei n = 1 bis 20 ist, bedeuten
und 0,01 bis 1 Gew% Terephthalsäuredialdehyd und/oder seiner Acetale von C₁- bis C₄-Alkoholen.

2. Polyamid nach Anspruch 1, dadurch gekennzeichnet, daß zusätzlich eine Verbindung der Formel III 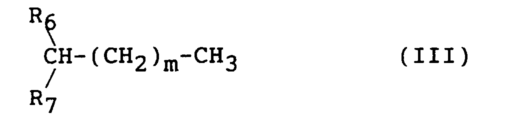 enthalten ist, worin m = 0 bis 10 ist und R₆ und R₇ dieselbe Bedeutung haben wie R₁ bis R₅.

3. Polyamid nach den Ansprüchen 1 oder 2, dadurch gekennzeichnet, daß in Formel III m = 2 und R₆ und R₇ = 3,5-Di-tertiär-butyl-4-hydroxyphenyl oder 3-Tertiär-butyl-4-hydroxy-6-methylphenyl sind.

4. Polyamid nach den Ansprüchen 1 bis 3, dadurch gekennzeichnet, daß als Zusatzstoff Wachs enthalten ist.

5. Polyamid nach den Ansprüchen 1 bis 4, dadurch gekennzeichnet, daß das Polyamid als Verstärkungsstoff Glasfasern oder andere Mineralstoffe enthält.

6. Polyamid nach den Ansprüchen 1 bis 5, dadurch gekennzeichnet, daß R₁ und R₂ 2,4-Di-tertiär-butylphenyl oder -(CO)-C₁₇H₃₅ sind.

7. Polyamid nach den Ansprüchen 1 bis 6, dadurch gekennzeichnet, daß R₃, R₄, R₅, jeweils 2,6-Di-tertiär-butylphenyl oder 2,4,6-Tri-tertiär-butylphenyl ist.

8. Verfahren zur Erhöhung der Viskosität von Polyamiden durch Zugabe von 0,01 bis 3 Gew% einer Verbindung der Formel I: 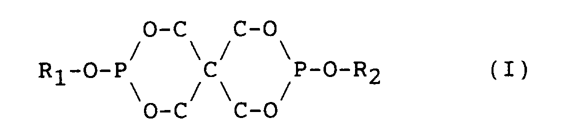 und/oder der Formel II 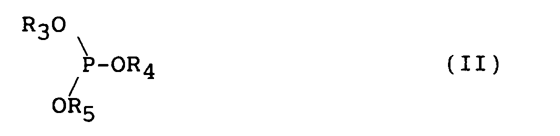 worin R₁ bis R₅ gleich oder verschieden sein können und Wasserstoff, Alkyl, Cycloalkyl, Aralkyl, Phenyl, substituiertes Phenyl, Hydroxyphenyl, substituiertes Hydroxyphenyl oder -(OC)-CₙH₂ₙ₊₁, wobei n = 1 bis 20 ist, bedeuten
und 0,01 bis 1 Gew% Terephthalsäuredialdehyd und/oder seiner Acetale von C₁- bis C₄-Alkoholen.

9. Verfahren nach Anspruch 8, dadurch gekennzeichnet, daß zusätzlich eine Verbindung der Formel III 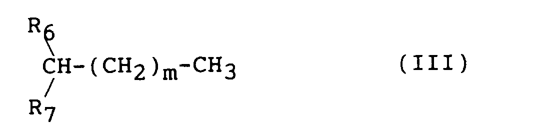 enthalten ist, worin m = 0 bis 10 ist und R₆ und R₇ dieselbe Bedeutung haben wir R₁ bis R₅.

10. Verfahren nach den Ansprüchen 8 oder 9, dadurch gekennzeichnet, daß in Formel III m = 2 und R₆ und R₇ = 3,5-Di-tertiär-butyl-4-hydroxyphenyl oder 3-Tertiär-butyl-4-hydroxy-6-methylphenyl sind.

11. Verfahren nach Ansprüchen 8 bis 10, dadurch gekennzeichnet, daß R₁ und R₂ 2,4-Di-tertiär-butylphenyl oder -(CO)-C₁₇H₃₅ sind.

12. Verfahren gemäß Ansprüchen 8 bis 11, dadurch gekennzeichnet, daß R₃, R₄, R₅, jeweils 2,6-Di-tertiär-butylphenyl oder 2,4,6-Tri-tertiär-butylphenyl sind.

13. Verfahren zur Herstellung der Verbindung nach den Ansprüchen 1 bis 8 durch Mischen der einzelnen Komponenten, Schmelzen und anschließendem Granulieren in einem Extruder.
